Europäisches Patentamt

European Patent Office

Office européen des brevets

(19)

(11) Publication number: **0 235 432**
A2

(12) # EUROPEAN PATENT APPLICATION

(21) Application number: 86306563.7

(22) Date of filing: 26.08.86

(51) Int. Cl.⁴: **A 41 H 27/00,** B 29 C 67/10

(30) Priority: 05.03.86 GB 8605438

(43) Date of publication of application: 09.09.87
Bulletin 87/37

(84) Designated Contracting States: **AT BE CH DE FR GB IT LI
LU NL SE**

(71) Applicant: **Joel & Aronoff U.K. Limited, Vale Industrial
Estate, Spilsby Lincolnshire (GB)**

(72) Inventor: **Sharrock, Michael, Joel Aronoff U.K. Ltd. Vale
Industrial Estate, Spilsby Lincolnshire (GB)**
Inventor: **Dul, Richard Nicholas, Joel Aronoff U.K. Ltd.
Vale Industrial Estate, Spilsby Lincolnshire (GB)**

(74) Representative: **MacMaster, Alan Jeffrey et al, Swindell
& Pearson 44 Friar Gate, Derby DE1 1DA (GB)**

(54) **Fabric repair system.**

(57) A method for the repair of damaged fabric comprises
applying a heat fusible coating to an area of matching fabric,
cutting a non-rectilinear patch from the coated area, placing
the patch over the area to be repaired with the coated
surface between the patch and the fabric to be repaired, and
applying heat and pressure to the patch to press it into
contact with the fabric to be repaired and causes adherence
thereto by fusion of the heat fusible coating.

Fabric Repair System

This invention relates to the repair of fabrics and is especially but by no means exclusively applicable to the repair of articles of clothing.

Articles of clothing and particularly clothing used at places of work, are susceptible to damage in various ways. One common form of damage is cigarette burns which produce a small hole which is difficult to repair satisfactorily, particularly in a manner which renders the repair unobtrusive. In effecting repairs by means of patching it is extremely difficult to match colours and particularly patterns of garments or other fabrics and the corners of patches have a tendency to lift and the edges to fray or run.

It is an object of the present invention to provide a method and means whereby these disadvantages may be obviated or mitigated.

According to one aspect of the invention there is provided a method for the repair of a damaged fabric comprising applying a heat fusible coating to an area of matching fabric (as hereinafter defined), cutting a non-rectilinear patch from the coated area, placing the patch over the area to be repaired with the coated surface between the patch and the fabric to be repaired, and applying heat and pressure to the patch to press same into contact with the fabric to be repaired and cause adherence thereto by fusion of the heat fusible coating.

Preferably the heat fusible coating is applied in the form of a pre-formed film to which heat is applied to fuse it on to the fabric to form said coating.

The term "matching" is used herein to refer to a fabric which matches another fabric both in terms of colour, texture and pattern taking account of wear or fading of the fabric to be matched. Thus a faded fabric is only matched by an equally faded patch in the sense intended herein.

Advantageously the patch may be cut from an undamaged area of the same fabric which is not visible when the fabric or garment is in use. In this way matching takes full account of fading or other wear of the fabric.

Preferably also in the case of woven fabrics the weave of the patch is aligned with the weave of the fabric prior to adherence of the patch to the damaged area. Additionally in the case of patterned fabrics the pattern of the patch is matched with that of the fabric to be repaired.

The invention also provides apparatus for use in the repair of fabrics comprising heated press means for application of a fusible film to a fabric to form a coating thereon, cutter means for cutting a nonrectilinear patch from the coated fabric, and heated press means for applying said patch to the area of fabric to be repaired.

Advantageously a single heated press means may be employed both to fuse said film to said matching fabric and to fuse said patch to the fabric to be repaired.

Preferably said cutter means incorporates a series of interchangeable cutter heads of different size and/or shape and is provided with means for adjusting the depth of cut dependent on the material from which patches are to be cut.

The invention also provides a fabric or garment repaired by means of the method or apparatus aforesaid.

An embodiment of the invention will now be described, by way of example only, with reference to the accompanying drawings in which:

Fig. 1 is a perspective view of a heated press employed in carrying out the method according to the invention; and

Fig. 2 is a perspective view of a cutting machine employed in carrying out the method of the invention.

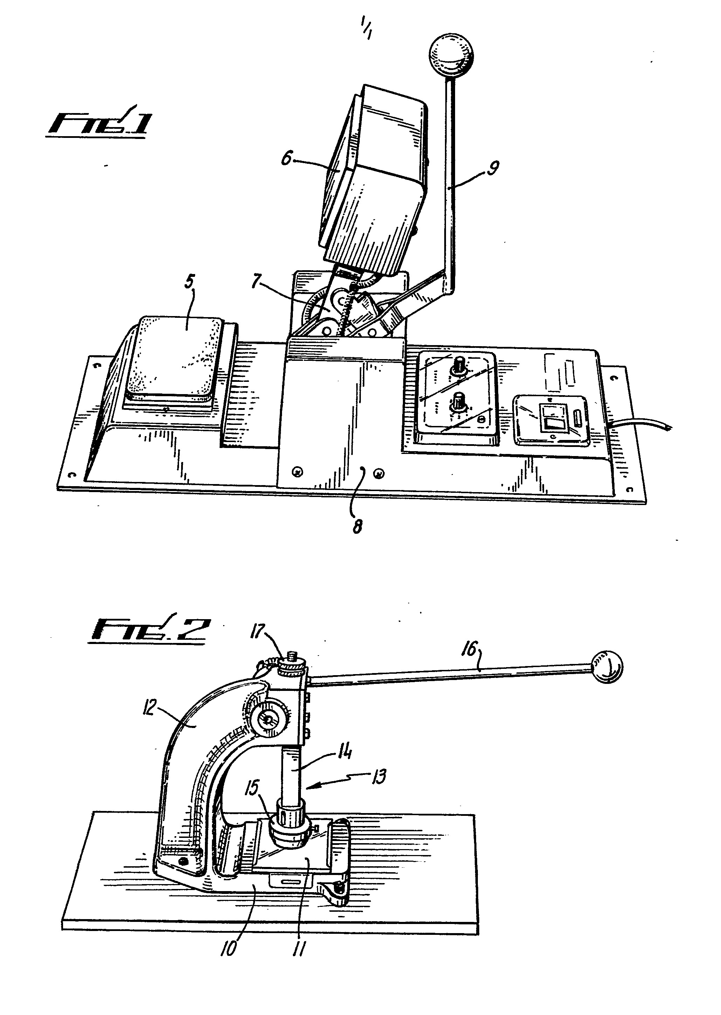

Referring to Fig. 1 there is shown a heated press comprising a fixed lower platen or base 5 and a movable upper platen 6 within which is mounted an electrical heating unit (not shown). The upper platen 6 is mounted on an arm 7 pivotally mounted on a body member 8 housing a power pack and supply circuit for the heater. A control handle 9 connected to the arm 7 is operable to move the arm downwards to bring the movable platen 6 towards the fixed platen 5 and simultaneously switch on the heater whereby to apply heat and pressure to material supported on the platen 5. The lower surface of the platen 6 is coated with PTFE or other non-stick material to prevent adherence of material thereto during pressing.

The apparatus is employed in the first stage of a process for repairing damaged garments or fabrics by placing an area of matching fabric on the fixed platen 5, superimposing over the fabric a heat fusible polyurethane film and moving the upper platen 6 downwardly into contact with the film and fabric whereby to apply heat and pressure thereto to fuse the film on to the surface of the fabric to form a coating thereon. The platen 6 is then lifted clear of the fabric ready for subsequent operations. The matching fabric material is preferably selected from some other area of the damaged garment or fabric which has been subjected to a similar degree of wear or fading but is in a region which is not visible when the garment or fabric is in use.

Referring to Fig. 2, a press or punch assembly is shown comprising a base 10 on which is mounted a cutting platform 11. A bracket 12 extends upwardly from and across the base 10 and supports a downwardly movable punch member 13 positioned above the support 11. The punch member comprises a shaft 14 slidably mounted in a bore in the outer end of the bracket 12 and a removable circular cutter head 15 detachably mounted on the lower end of the shaft 14. The cutter head may be replaced by alternative cutter heads of different diameter or of other non-rectilinear form, for example oval or rectangular but with rounded corners. An operating arm 16 pivotally mounted on the bracket 12 is operatively connected to the rod 14 and is operative on downward movement to bring the cutter 15 into contact with material supported on the platform 11. An adjustable stop member 17 mounted on the upper portion of the rod 14 may be moved to different positions to limit the extent of downward movement of the cutter 15 and hence control the cutting depth.

The cutting apparatus of Fig. 2 is employed in a second stage of the process to cut a preferably circular patch from the coated matching fabric for use in repairing the damaged garment. For this purpose the coated portion of the fabric is placed on the platform 11 and the arm 16 moved downwardly so that the cutter 15 cuts a circular patch from the fabric. This is then utilised to repair the damaged area of the garment as described below.

Following production of the patch using the cutting mechanism of Fig. 2 the damaged area of the garment is placed on the fixed platen 5 of the press shown in Fig. 1 and the patch is placed over the damaged area with the coated face down. In placing the patch it is positioned such that any pattern on the patch matches that on the fabric and in the case of woven fabrics the weave on the patch is aligned with the weave on the main body of the fabric. The movable platen 6 is then moved downwardly into contact with the patch and the heater energised whereby to fuse the polyurethane film and bond the patch to the garment. The platen 6 is then raised and the repaired garment removed from the heater. If desired a similar patch could be applied to the opposite side of the damaged area in the same way.

By use of the method and apparatus described above, extremely effective patch repair of garments or fabrics can be effected. Since the patch consists of matching fabric as herein defined and takes account of wear, fading or the like of the existing fabric, and since the patch is aligned with the main fabric both in terms of pattern and weave, once affixed in position the patch is virtually indistinguishable from the main fabric itself. By forming the patch from an adjacent area of spare material in the same garment or other product very precise matching can be obtained, producing an extremely effective and largely invisible repair. Moreover the apparatus employed in carrying out the repair is simple in both construction and operation and relatively inexpensive.

The use of non-rectilinear patches is particularly advantageous in that the patches do not have corners which tend to lift where square or other rectilinear patches are employed, nor in the case of circular or oval patches do they have straight edges which commonly tend to fray or run. By virtue of the provision of the cutting apparatus, precisely accurate patches of a variety of different sizes and/or shapes may be produced as and when required, thereby producing a neat finish not obtainable by hand cutting or the like.

Various modifications may be made without departing from the invention. For example alternative forms of heated press and of cutting apparatus may be employed and heat fusible film materials other than polyurethane may be used. Moreover while the invention has been described with reference to the repair of garments, and while reference has been made to cigarette burns, it may equally be employed in the repair of a variety of forms of damage to a wide range of other articles such as table linen, curtains, upholstery and the like. The invention may also be employed to repair waterproof garments such as tent fabrics by spray coating a suitable waterproofing agent over the patch following completion of the repair.

In an alternative arrangement the heated press may be replaced by a domestic iron used in conjunction with a suitable heat resistant sheet serving to prevent the polyurethane or other fusible material from adhering to the surface of the iron during application.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

CLAIMS:

1.    A method for the repair of damaged fabric characterised by applying a heat fusible coating to an area of matching fabric (as hereinafter defined), cutting a non-rectilinear patch from the coated area, placing the patch over the area to be repaired with the coated surface between the patch and the fabric to be repaired, and applying heat and pressure to the patch to press same into contact with the fabric to be repaired and cause adherence thereto by fusion of the heat fusible coating.

2.    A method according to claim 1 characterised in that said heat fusible coating is applied in the form of a pre-formed film to which heat is applied to fuse it on to the fabric to form said coating.

3.    A method according to claim 1 or 2 characterised in that said patch is cut from an undamaged area of the same fabric which is not visible when the fabric or garment is in use.

4.    A method according to any preceding claim wherein said fabric is a woven fabric characterised in that the weave of the patch is aligned with the weave of the fabric prior to adherence of the patch to the damaged area.

5. A method according to any preceding claim wherein said fabric is a patterned fabric characterised in that the pattern of the patch is matched with that of the fabric to be repaired.

6. A garment or fabric characterised in that it has been repaired by the method according to any preceding claim.

7. Apparatus for use in the repair of fabrics characterised by heated press means (5,6) for application of a fusible film to a fabric to form a coating thereon, cutter means (13) for cutting a non-rectilinear patch from the coated fabric, and heated press means (5,6) for applying said patch to the area of fabric to be repaired.

8. Apparatus according to claim 7 characterised in that a single heated press means (5,6) is employed both to fuse said film to said matching fabric and to fuse said patch to the fabric to be repaired.

9. Apparatus according to claim 7 or 8 characterised in that said cutter means (13) incorporates a series of

0235432

interchangeable cutter heads (15) of different size and/or shape.

10.    Apparatus according to claim 7, 8 or 9 characterised in that said cutter means (13) is provided with means (17) for adjusting the depth of cut dependent on the material from which patches are to be cut.

11.    A garment or fabric characterised in that it has been repaired by means of the apparatus of any of claims 7 to 10.

0235432

FIG.1

FIG.2